# EUROPEAN PATENT SPECIFICATION

(11) **EP 2 637 391 B1**
(45) Date of publication and mention of the grant of the patent: **19.06.2019**
(21) Application number: 12158879.2
(22) Date of filing: 09.03.2012
(51) Int. Cl.: H04M 1/725, G06Q 10/10

(54) **Message search method and electronic device**
Nachrichtensuchverfahren und elektronische Vorrichtung
Procédé de recherche de messages et dispositif électronique

(43) Date of publication of application: 11.09.2013
(73) Proprietor: BlackBerry Limited, Waterloo, ON N2K 0A7 (CA)
(72) Inventor: Benedek, Joseph Eytan, Mississauga, Ontario L4W 0B5 (CA); Lazaridis, Mihal, Waterloo, Ontario N2L 3W8 (CA)
(74) Representative: Jarrett, Daniel Phillip

(56) References cited:
- EP-A1- 2 073 517
- EP-A1- 2 144 411
- US-A1- 2009 042 602
- US-A1- 2009 228 825
- US-A1- 2011 130 123
- US-A1- 2011 252 023
- Isaack Kendall: "How to search email messages on your BlackBerry | CrackBerry.com", , 22 September 2011 (2011-09-22), XP055454312, Retrieved from the Internet: URL:https://crackberry.com/how-search-emai l-messages-your-blackberry [retrieved on 2018-02-26]

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

US 2011/0130123 A1 describes a method for managing and searching information in a mobile terminal and methodology for constructing the method. The method comprises: when a text is provided, preprocessing the provided text; extracting anchor text candidates in the preprocessed text; calculating relatedness between terms; determining ranking based on the relatedness using context information; and constructing a hypertext system for providing hypertext links to the provided text based on the ranking.

Improvements in devices with touch-sensitive displays are desirable.

### Summary

Aspects of the present disclosure are defined in the accompanying independent claims.

### Brief Description of the Drawings

FIG. 1 is a block diagram of a portable electronic device in accordance with the disclosure.
FIG. 2, FIG. 3, FIG. 4, and FIG. 5 illustrate examples of searching messages on an electronic device in accordance with the disclosure.
FIG. 6 is a flowchart illustrating a method of message searching on an electronic device in accordance with the disclosure.

### Detailed Description

The following describes an apparatus for and method of message search. The apparatus may be an electronic device. The electronic device displays information associated with a message and detects initiation of a search. The initiation is associated with the message such that the electronic device identifies a search request from an element of the message without the search request being received as keyboard input at the time of the search. The search request may be an identity of the sender of the message, a subject of the message, a keyword, and so forth.

The electronic device searches messages to identify messages that correspond to the search request. The electronic device may search all messages available to the electronic device or may search a subset of available messages, such as messages stored at the electronic device, messages stored remotely from the electronic device, and so forth. The electronic device searches multiple message types, such as electronic mail messages, short messaging service (SMS) messages, PIN messages, instant messages, multimedia messaging service (MMS) messages, voicemails, voice-to-text converted voicemails, missed voice calls, and so forth. The electronic device displays the results of the search sorted by message type. The electronic device may first display the message type of the message associated with the search initiation followed by other message types. In another example, messages may additionally or alternatively be sorted by a date associated with the message, such as the receipt date, the sent date, and so forth.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, and so forth. The portable electronic device may be a portable electronic device without wireless communication capabilities, such as handheld electronic games, digital photograph albums, digital cameras, media players, e-book readers, and so forth. Examples of non portable electronic devices include desktop computers, electronic white boards, smart boards utilized for collaboration, built-in monitors or displays in furniture or appliances, and so forth.

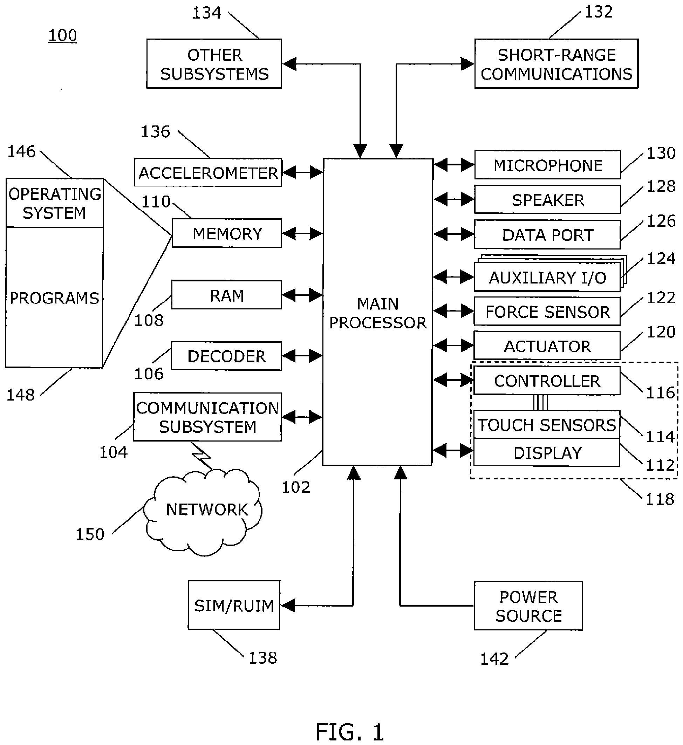

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

The touch-sensitive display 118 includes a display area in which information may be displayed, and a non-display area extending around the periphery of the display area. The display area generally corresponds to the area of the display 112. Information is not displayed in the non-display area by the display, which non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed under the non-display area. Touch sensors may be disposed in the non-display area, which touch sensors may be extended from the touch sensors in the display area or distinct or separate touch sensors from the touch sensors in the display area. A touch, including a gesture, may be associated with the display area, the non-display area, or both areas. The touch sensors may extend across substantially the entire non-display area or may be disposed in only part of the non-display area.

Electronic devices provide access to multiple message systems that process messages of different types. For example, messages include electronic mail messages, SMS messages, PIN messages, instant messages, MMS messages, voicemails, missed voice call identifications, notifications, and so forth. Electronic devices also provide access to multiple message accounts on a message system. Messages for the multiple message systems and accounts are often stored separately on the electronic devices and servers associated with the electronic devices. Regardless of how the messages are stored, a user may choose to search for related messages amongst some or all available messaging applications, message stores, message systems, and so forth. Some electronic devices provide an advanced search option, where a search request is received by the electronic device from a physical or virtual keyboard. An advanced search option including a search request input dialog may be displayed as a result of detecting initiation of an advanced search. Some electronic devices display search results of multiple message types sorted chronologically,

The electronic device displays information associated with messages and detect initiation of a search. To facilitate the search, the electronic devices determine a search request, e.g., a search query, a search parameter, a search term, a search attribute, a search aspect, and so forth, from a message for which the associated information is displayed. The search request may be determined from the sender of the message, the subject of the message, the recipient of the message, the body of the message, a keyword in a field of the message, and so forth. For example, a touch associated with a displayed word or phrase of the message results in identification of the word as a keyword to be searched. A search request is determined without the search request being received from a physical or virtual keyboard at the time of the search initiation, without prompting a user to input a search request using a keyboard, without displaying a text box for inputting the search request, without initiation of an advanced search option, and so forth. Some input may be received from the physical or virtual keyboard, e.g., detecting selection of a shortcut key or keys, detecting selection of a selection option from keyboard input, and so forth. Selection options may be referred to as options herein. Optionally, initiation of the search is detected without utilizing an advanced search option.

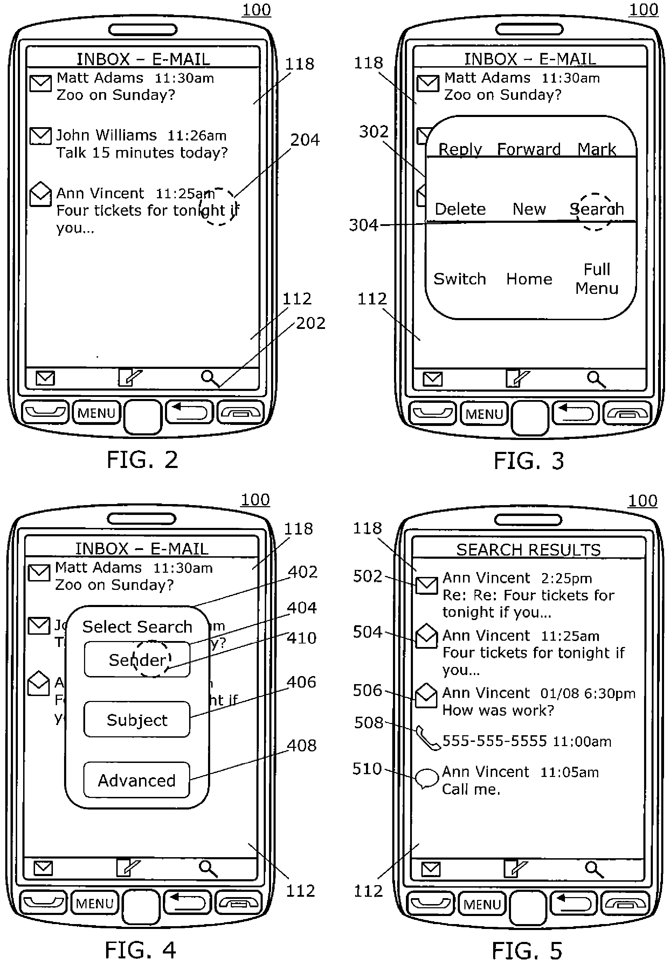

Information associated with messages is displayed on the touch-sensitive display 118 of the electronic device 100 as shown in the example of FIG. 2. The example messages are electronic mail messages in an inbox of an electronic mailbox. The messages may optionally be any other type of message. A sender, time of receipt, and subject are displayed for each message in this example.

The electronic device 100 includes various physical and virtual controls and selection options, including the search option 202, for detecting interaction with the electronic device 100 including the search option 202. Detecting a touch associated with the search option 202 results in initiation of a search. When message selection is detected, e.g., detection of a touch associated with display of information associated with the message, detecting a touch associated with the search option 202 results in initiation of a search with a search request based on the message. A search menu may be displayed as shown in the example of FIG. 4. Alternatively, the search request may be determined from the message and search results may be displayed as shown in the example of FIG. 5. For example, when a setting of the electronic device is set for searching by sender, the search results as shown in FIG. 5 include messages associated with the sender of the selected message. When selection of a message is not detected, detecting a touch associated with the search option 202 results in displaying a prompt for a search request, e.g., a search request may be input by detecting a touch associated with a message, receiving a search request from a physical keyboard, receiving a search request from a virtual keyboard, and so forth.

A held touch at a touch location 204 associated with the display of information associated with a message results in display of a menu as shown in the example of FIG. 3. Optionally, the touch location 204 is associated with particular information of the message, such as the sender, the time of receipt, the subject, and so forth. The search request may be determined based on the particular information and the search results may be displayed as shown in the example of FIG. 5. For example, when the touch location 204 is associated with the sender, the search request is determined based on the sender, when the touch location 204 is associated with subject, the search request is determined based on the subject, and so forth. Alternatively, detecting a touch at a touch location 204 associated with a display of information associated with a message results in initiation of a search and a search menu is displayed as shown in the example of FIG. 4.

In the example of FIG. 3, the electronic device 100 displays a menu 304. The example menu 304 includes controls and selection options for detecting interaction with the electronic device 100. Detecting a touch at a touch location 304 associated with a search option of the menu 304 results in initiation of a search. Optionally, detecting the touch at the touch location 304 associated with the search option results in display of a search menu as shown in the example of FIG. 4. Alternatively, where the search request is determined without the menu of FIG. 4, search results are displayed as shown in the example of FIG. 5.

In the example of FIG. 4, the electronic device 100 displays a search menu 402 for indicating how a search request is to be determined. The example menu 402 includes a sender option 404, a subject option 404, and an advanced option 406. Detecting a touch at a touch location 410 associated with the sender option 402 results in determination of a search request based on the sender of the previously selected message, e.g., the message associated with the touch location 204 as shown in the example of FIG. 2.

Detecting a touch associated with the subject option 406 results in determination of a search request based on the subject of the previously selected message. Detecting a touch associated with the advanced option 408 results in display of an advanced search menu.

Search results are displayed on the touch-sensitive display 118 of the electronic device 100 as shown in the example of FIG. 5. The search results of FIG. 5 include messages associated with the sender of the message selected in FIG. 2, "Ann Vincent." The example search results include three emails 502, 504, 506 from Ann Vincent, a missed phone call 508 from a phone number associated with Ann Vincent, and a SMS from Ann Vincent. The search results are sorted by message type. The message type of the message associated with the initiation of the search is listed first, e.g., emails, followed by missed calls, and following by SMS messages. The search results may optionally be sorted by message type first and date second. Alternatively, the search results may not be sorted or may be sorted in any other manner.

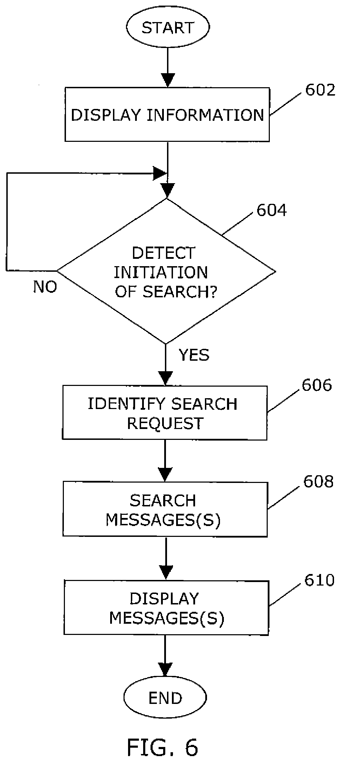

A flowchart illustrating a method of message search is shown in FIG. 6. The method may be carried out by software executed, for example, by the processor 102. Optionally, some or all of the method may be carried out by software executed on a processor remote from the electronic device 100, such as a processor of a server, a processor of a message service, a processor of a network cloud service, and so forth. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

Information associated with messages is displayed 602 on the touch-sensitive display 118. The messages may be any type of messages. Any information associated with the messages may be displayed, such as a sender of a message, a recipient of a message, a time of receipt of a message, a subject of a message, a body of a message, and so forth. The information displayed for the messages may vary based on the message type. Information associated with a single message maybe displayed or information associated with multiple messages may be displayed.

When initiation of a search associated with a message is detected 604, the electronic device 100 identifies 606 a search request determined from at least part of an element of the message. The search may be initiated by detecting selection of a search option, such as the search option 202 or the search option of the menu 304; by detecting a held touch, such as the touch detected at the touch location 204; and so forth. An element of a message may include a date included in the message, a proper noun included in the subject of the message, a proper noun included in the body of the message, a location included in the subject of the message, a location included in the body of the message, a unique or semi-unique number included in the subject of the message, a unique or semi-unique number included in the body of the message, a unique or semi-unique number included in the sender of the message, a unique or semi-unique number included in the recipient of the message, a keyword in the subject of the message and specified in a listing of keywords, a keyword in the body of the message and specified in the listing of keywords, one or more special characters, and so forth.

The search request may be determined from the sender of the message, the subject of the message, or any other element of the message. Optionally, the search request is determined based on detecting selection of a selection option, such as the options 404, 406, 408 of the search menu 402. Alternatively, the search request is determined based on detecting a touch at a location associated with initiation of the search. For example, detecting a touch at a location associated with display of sender information of a message results in determining a search request from the sender information. Optionally, the search request is determined based on a setting of the electronic device 100. For example, when the setting is set to "Subject," the search request is determined from subject of the message. The search request may be determined from a single element of a message or may be determined from multiple elements of a message. For example, the search request may be determined from a sender of a message and a subject of the message.

The search request may be determined to be all or part of an element of a message. For example, if the sender of a message is *John User <juser*@*domain.com>,* the search request may be juser@domain.com, juser, John, User, John User, domain, domain.com, and so forth. For example, if the subject of a message is *Meet me at 10pm at the Diner,* the search request may be 10pm, 9pm to 11pm, Diner, Meet, Meet me, and so forth.

After identifying 606 the search request, the electronic device 100 searches 608 for messages that correspond to the search request. For example, messages that correspond to the search request have at least one element that corresponds to at least one element of the search request. An element of a message corresponds to an element of a search request when the elements match, when a part of the elements match, when the elements are similar, and so forth. Optionally, an element of a message may correspond to an element of a search request when the elements are linked in an information list, such as contact information stored in an address book, contact list, contact application, and so forth. For example, a record in an address book identify a persona and may include, for that person, a first identifier, e.g., a telephone number, associated with a first message type and a second identifier, e.g., an electronic mail address, associated with a second message type. In such an example, when searching by sender based on a message from the first identifier, the electronic device 100 may identify messages having a sender specified by the first identifier or the second identifier.

Optionally, the electronic device 100 may search 608 for messages by transmitting the search request or information associated with the search request to one or more remote devices. The electronic device 100 may transmit he search request to one or more messaging servers. The electronic device 100 may receive the search results from the one or more remote devices.

The electronic device 100 searches among messages having multiple message types. Optionally, the electronic device 100 may search among messages stored in multiple locations at the electronic device 100, messages stored in multiple folders, or messages stored remotely from the electronic device 100. Optionally, the electronic device 100 may include a setting for identifying which of the available message types are to be searched, a selection option for identifying message types may be displayed in response to the search request or the initiation of the search, and so forth.

The messages identified by searching 608 are displayed 610 on the touch-sensitive display 118. Optionally, the display of the messages is sorted by message type. Messages of the same type as the message for which the search was initiated are displayed first followed by messages of other types. For example, when the search was initiated based on an electronic mail message, electronic mail messages are sorted first followed by other message types as shown in, for example, FIG. 5. Alternatively, the messages may be sorted, re-sorted, rearranged, and so forth. The messages may be sorted by one or more of type, date, subject, sender, and so forth.

Initiating a search and determining a search request based on an existing message, as disclosed herein, facilitates searching of messages without receiving the search request by keyboard input, making searching of messages easier. Searching without receiving the search request by keyboard input is advantageous, for example, on a mobile device due to reduced user input capabilities. Additionally, searching multiple message types without an advanced search facilitates efficient access to related messages. For example, multiple message types can be searched from a display of a message without switching to a dedicated search interface. Searching multiple message types facilitates identifying related messages that are received from multiple message services. In an example scenario, an electronic mail message from a sender proposes a time for a meeting, a discussion topic for the meeting is sent by the sender in an SMS message, and a change to the meeting time is left in a voicemail from the sender. Initiating a search with the search request based on the sender of the electronic mail message locates the three messages and displays them, optionally, sorting by message type with the electronic mail message displayed first. As disclosed herein, selecting controls or selection options to reach an Advanced Search or search request entry dialogue is not needed.

A method comprises displaying information associated with a first message of a first type on a display of an electronic device and detecting initiation of a search associated with the first message. The method includes identifying, by the electronic device, a search request determined from an element of the first message and searching, by the electronic device, for a second message of the first type and a third message of a second type, wherein the second message and the third message correspond to the search request. The method includes displaying information associated with the second message and information associated with the third message.

A method comprises displaying information associated with a first message of a first type on a display of an electronic device, detecting a search request associated with the first message, and identifying, by the electronic device, a search request determined from an element of the first message. The method includes searching, by the electronic device, for messages that correspond to the search request and displaying results of the searching by type, wherein messages having the first type are displayed first followed by messages of a second type.

An electronic device comprises a display and a processor configured to display information associated with a first message of a first type on the display, detect initiation of a search associated with the first message, identify a search request from an element of the first message, search for a second message of the first type and a third message of a second type, wherein the second message and the third message correspond to the search request, and display information associated with the second message and information associated with the third message on the display.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description.

## Claims

1. A method comprising:
displaying (602) information associated with a first message of a first type on a display (112) of an electronic device (100);
detecting (604) initiation of a search associated with the first message;
detecting selection of one of a plurality of displayed search menu options (404, 406, 408), the plurality of displayed search menu options including a sender option (404) and a subject option (406);
identifying (606), by the electronic device (100), a search request determined from an element of the first message, the determining being based on:
a sender of the first message when the sender option is selected, and
a subject of the first message when the subject option is selected;
in response to the identifying, searching (608), by the electronic device (100), for a second message of the first type and a third message of a second type, wherein the second message and the third message correspond to the search request,
and wherein a message corresponds to the search request when an element of the message is linked to an element of the search request by a record in an address book;
displaying (610) information associated with the second message and information associated with the third message.

2. The method according to claim 1, wherein the search request is identified without the search request being received as keyboard input.

3. The method according to claim 1, wherein displaying (610) the information comprises displaying a list of messages wherein the list of messages is sorted such that messages of the first type are displayed first.

4. The method according to claim 1, comprising sorting display of the second message and the third message by message type.

5. The method according to claim 4, comprising secondarily sorting display of the second message and the third message by a date.

6. The method according to claim 1, wherein the search request is an identity of the sender of the first message.

7. The method according to claim 1, wherein the search request is at least a part of the subject of the first message.

8. The method according to claim 1, wherein detecting the search request comprises detecting a touch associated with display of the first message.

9. The method according to claim 1, wherein the search request is identified without text input provided after the initiation of the search.

10. The method according to claim 1, wherein the searching searches multiple message accounts.

11. An electronic device (100) comprising:
a display (112);
a processor (102) configured to:
display (602) information associated with a first message of a first type on the display;
detect (604) initiation of a search associated with the first message;
detect selection of one of a plurality of displayed search menu options (404, 406, 408), the plurality of displayed search menu options including a sender option (404) and a subject option (406);
identify (606) a search request determined from an element of the first message, the determining being based on:
a sender of the first message when the sender option is selected, and
a subject of the first message when the subject option is selected;
in response to the identifying, search (608) for a second message of the first type and a third message of a second type, wherein the second message and the third message correspond to the search request,
and wherein a message corresponds to the search request when an element of the message is linked to an element of the search request by a record in an address book;
display (610) information associated with the second message and information associated with the third message on the display.

12. The electronic device (100) according to claim 11, wherein the search request is identified without the search request being received as keyboard input.

13. The electronic device (100) according to claim 11, comprising a memory storing the first message, the second message, and the third message.

14. A computer-readable medium comprising computer-readable code executable by at least one processor of a portable electronic device to perform the method of any of claims 1 to 10.

## Patentansprüche

1. Verfahren, enthaltend:
Anzeigen (602) von mit einer ersten Mitteilung eines ersten Typs verbundenen Informationen auf einer Anzeige (112) einer elektronischen Vorrichtung (100);
Erfassen (604) der Auslösung einer Suche in Verbindung mit der ersten Mitteilung;
Erfassen der Auswahl einer einer Vielzahl von angezeigten Suchmenüoptionen (404, 406, 408), wobei die Vielzahl der angezeigten Suchmenüoptionen eine Senderoption (404) und eine Gegenstandsoption (406) einschließt;
Identifizieren (606) einer Suchanfrage, die aus einem Element der ersten Mitteilung ermittelt wird, durch die elektronische Vorrichtung (100), welche Ermittlung basiert auf:
einem Sender der ersten Mitteilung, wenn die Senderoption ausgewählt ist, und
einem Gegenstand der ersten Mitteilung, wenn die Gegenstandsoption ausgewählt ist;
ansprechend auf die Identifizierung, Suchen (608) nach einer zweiten Mitteilung des ersten Typs und einer dritten Mitteilung eines zweiten Typs durch die elektronische Vorrichtung (100), wobei die zweite Mitteilung und die dritte Mitteilung der Suchanfrage entsprechen,
und wobei eine Mitteilung der Suchanfrage entspricht, wenn ein Element der Mitteilung mit einem Element der Suchanfrage durch einen Eintrag in einem Adressbuch verbunden ist;
Anzeigen (610) mit der zweiten Mitteilung verbundener Informationen und mit der dritten Mitteilung verbundener Informationen.

2. Verfahren nach Anspruch 1, wobei die Suchanfrage identifiziert wird, ohne dass die Suchanfrage als Tastatureingabe empfangen wird.

3. Verfahren nach Anspruch 1, wobei das Anzeigen (610) der Informationen das Anzeigen einer Liste von Mitteilungen umfasst, wobei die Liste von Mitteilungen so sortiert ist, dass die Mitteilungen der ersten Art zuerst angezeigt werden.

4. Verfahren nach Anspruch 1, enthaltend das Sortieren der Anzeige der zweiten Mitteilung und der dritten Mitteilung nach dem Mitteilungstyp.

5. Verfahren nach Anspruch 4, enthaltend das sekundäre Sortieren der Anzeige der zweiten Mitteilung und der dritten Mitteilung nach einem Datum.

6. Verfahren nach Anspruch 1, wobei die Suchanfrage eine Identität des Senders der ersten Mitteilung ist.

7. Verfahren nach Anspruch 1, wobei die Suchanfrage zumindest ein Teil des Gegenstands der ersten Mitteilung ist.

8. Verfahren nach Anspruch 7, wobei das Erfassen der Suchanfrage das Erfassen einer mit der Anzeige der ersten Mitteilung verbundenen Berührung umfasst.

9. Verfahren nach Anspruch 1, wobei die Suchanfrage ohne eine Texteingabe, die nach der Auslösung der Suche bereitgestellt wird, identifiziert wird.

10. Verfahren nach Anspruch 1, wobei die Suche mehrere Mitteilungskonten durchsucht.

11. Elektronische Vorrichtung (100), enthaltend:
eine Anzeige (112)
einen Prozessor (102), der dafür konfiguriert ist,
mit einer ersten Mitteilung eines ersten Typs verbundene Informationen auf der Anzeige anzuzeigen (602);
die Auslösung einer mit der ersten Mitteilung verbundenen Suche zu erfassen (604);
das Auswählen einer einer Vielzahl von angezeigten Suchmenüoptionen (404, 406, 408) zu erfassen, wobei die Vielzahl von angezeigten Suchmenüoptionen eine Senderoption (404) und eine Gegenstandsoption (406) einschließt;
eine aus einem Element der ersten Mitteilung ermittelte Suchanfrage zu identifizieren (606), wobei die Ermittlung basiert auf:
einem Sender der ersten Mitteilung, wenn die Senderoption ausgewählt ist, und
einem Gegenstand der ersten Mitteilung, wenn die Gegenstandsoption ausgewählt ist;
ansprechend auf die Identifizierung nach einer zweiten Mitteilung des ersten Typs und einer dritten Mitteilung eines zweiten Typs zu suchen (608), wobei die zweite Mitteilung und die dritte Mitteilung der Suchanfrage entsprechen,
und wobei eine Mitteilung der Suchanfrage entspricht, wenn ein Element der Mitteilung mit einem Element der Suchanfrage durch einen Eintrag in einem Adressbuch verbunden ist;
mit der zweiten Mitteilung verbundene Informationen und mit der dritten Mitteilung verbundene Informationen auf der Anzeige anzuzeigen (610).

12. Elektronische Vorrichtung (100) nach Anspruch 11, wobei die Suchanfrage identifiziert wird, ohne dass die Suchanfrage als Tastatureingabe empfangen wird.

13. Elektronische Vorrichtung (100) nach Anspruch 11, enthaltend einen Speicher, der die erste Mitteilung, die zweite Mitteilung und die dritte Mitteilung speichert.

14. Computerlesbares Medium, enthaltend einen computerlesbaren Code, der durch mindestens einen Prozessor einer tragbaren elektronischen Vorrichtung ausführbar ist, um das Verfahren nach einem der Ansprüche 1 bis 10 auszuführen.

## Revendications

1. Procédé comprenant les étapes consistant à :
afficher (602) des informations associées à un premier message d'un premier type sur un dispositif d'affichage (112) d'un dispositif électronique (100) ;
détecter (604) le lancement d'une recherche associée au premier message ;
détecter la sélection de l'une d'une pluralité d'options de menu de recherche affichées (404, 406, 408), la pluralité d'options de menu de recherche affichées comportant une option expéditeur (404) et une option objet (406) ;
identifier (606), par le dispositif électronique (100), une demande de recherche déterminée à partir d'un élément du premier message, la détermination étant basée sur :
un expéditeur du premier message lorsque l'option expéditeur est sélectionnée, et
un objet du premier message lorsque l'option objet est sélectionnée ;
en réponse à l'identification, chercher (608), par le dispositif électronique (100), un deuxième message du premier type et un troisième message d'un deuxième type, où le deuxième message et le troisième message correspondent à la demande de recherche,
et où un message correspond à la demande de recherche lorsqu'un élément du message est lié à un élément de la demande de recherche par un enregistrement dans un carnet d'adresses ;
afficher (610) des informations associées au deuxième message et des informations associées au troisième message.

2. Procédé selon la revendication 1, dans lequel la demande de recherche est identifiée sans que la demande de recherche ne soit reçue comme entrée au clavier.

3. Procédé selon la revendication 1, dans lequel l'affichage (610) des informations comprend l'étape consistant à afficher une liste de messages, où la liste de messages est triée de sorte que des messages du premier type soient affichés en premier lieu.

4. Procédé selon la revendication 1, comprenant l'étape consistant à trier l'affichage du deuxième message et du troisième message par type de message.

5. Procédé selon la revendication 4, comprenant l'étape consistant à trier en second lieu l'affichage du deuxième message et du troisième message par date.

6. Procédé selon la revendication 1, dans lequel la demande de recherche est une identité de l'expéditeur du premier message.

7. Procédé selon la revendication 1, dans lequel la demande de recherche est au moins une partie de l'objet du premier message.

8. Procédé selon la revendication 1, dans lequel la détection de la demande de recherche comprend l'étape consistant à détecter un effleurement associé à l'affichage du premier message.

9. Procédé selon la revendication 1, dans lequel la demande de recherche est identifiée sans entrée de texte fournie après le lancement de la recherche.

10. Procédé selon la revendication 1, dans lequel la recherche permet de chercher de multiples comptes de messagerie.

11. Dispositif électronique (100) comprenant :
un dispositif d'affichage (112) ;
un processeur (102) configuré pour :
afficher (602) des informations associées à un premier message d'un premier type sur le dispositif d'affichage ;
détecter (604) le lancement d'une recherche associée au premier message ;
détecter la sélection de l'une d'une pluralité d'options de menu de recherche affichées (404, 406, 408), la pluralité d'options de menu de recherche affichées comportant une option expéditeur (404) et une option objet (406) ;
identifier (606) une demande de recherche déterminée à partir d'un élément du premier message, la détermination étant basée sur :
un expéditeur du premier message lorsque l'option expéditeur est sélectionnée, et
un objet du premier message lorsque l'option objet est sélectionnée ;
en réponse à l'identification, chercher (608) un deuxième message du premier type et un troisième message d'un deuxième type, où le deuxième message et le troisième message correspondent à la demande de recherche, et
dans lequel un message correspond à la demande de recherche lorsqu'un élément du message est lié à un élément de la demande de recherche par un enregistrement dans un carnet d'adresses ;
afficher (610) des informations associées au deuxième message et des informations associées au troisième message sur le dispositif d'affichage.

12. Dispositif électronique (100) selon la revendication 11, dans lequel la demande de recherche est identifiée sans que la demande de recherche ne soit reçue comme entrée au clavier.

13. Dispositif électronique (100) selon la revendication 11, comprenant une mémoire stockant le premier message, le deuxième message et le troisième message.

14. Support lisible par ordinateur comprenant un code lisible par ordinateur exécutable par au moins un processeur d'un dispositif électronique portable pour réaliser le procédé de l'une des revendications 1 à 10.
